# EUROPEAN PATENT APPLICATION

(11) **EP 4 640 410 A1**
(43) Date of publication of application: **29.10.2025**
(21) Application number: 23938564.4
(22) Date of filing: 04.10.2023
(51) Int. Cl.: B29C 70/44, B29C 43/12, B29C 70/54, B65H 45/12

(54) **PROCESSING DEVICE AND PROCESSING METHOD**

(30) Priority: 23.05.2023 JP 2023084386
(71) Applicant: Mitsubishi Heavy Industries, Ltd., Tokyo 100-8332 (JP)
(72) Inventor: TANEICHI, Jumpei, Tokyo 100-8332 (JP)
(74) Representative: Studio Torta S.p.A.
(86) International application number: PCT/JP2023/036294
(87) International publication number: WO 2024/241602

(57) **Abstract**

The processing device is provided with: a pair of a first mandrel block (10) and a second mandrel block (20) having side surfaces and upper surfaces and a laminate installed at the connection of the side surfaces and upper surfaces; a wedge block (30) disposed so as to protrude in the Z-axis direction between the first mandrel block (10) and the second mandrel block (20); a membrane (40) that covers the first mandrel block (10) and the second mandrel block (20) and the wedge block (30); and a drive unit that moves the first mandrel block (10) and the second mandrel block (20) apart. The membrane (40) is pulled along with the movement of the first mandrel block (10) and the second mandrel block (20). The wedge block (30) moves so that the protrusion length decreases along with the movement of the first mandrel block (10) and the second mandrel block (20).

## Description

### Technical Field

The present disclosure relates to a processing device and a processing method.

### Background Art

As a component used in an aircraft or the like, there is a long component (for example, a stringer) having a predetermined cross-sectional shape (for example, an L shape, a C shape, or the like) when cut along a plane orthogonal to a longitudinal direction. As one method for manufacturing such a component, a method of manufacturing the component by performing bending processing on a flat plate-shaped laminate obtained by laminating fiber reinforced sheets, which are composite materials, is known. In this method, when bending processing is performed on the laminate, in order to uniformly compress the entire surface of the laminate, the laminate installed on the molding die is covered with a flexible membrane having elasticity in the in-plane direction, and a vacuum may be drawn between the membrane and the molding die. In this method, it is known that the membrane is controlled to be appropriately in close contact with the laminate (for example, PTL 1 and PTL 2).

PTL 1 discloses a method of covering a laminate with a membrane and performing bending forming by vacuum drawing. In this method, the membranes are disposed on both sides of the laminate in the up-down direction, and a portion that supports the membrane is provided at a position away from the molding die. In addition, the membrane disposed on the upper side is controlled to be continuously brought into close contact with the lower side from the upper surface side of the molding die by the tension of the membrane disposed on the lower side of the laminate.

In addition, PTL 2 discloses a method of covering a laminate with a membrane and drawing a vacuum between the membrane and a molding die while mechanically lowering a plate supporting a portion to be bent. In this method, the position where the membrane is in close contact with the support plate is controlled by the position of the support plate.

### Citation List

### Patent Literature

[PTL 1] U.S. Patent No. 10,016,949
[PTL 2] U.S. Patent No. 11,313,089

### Summary of Invention

### Technical Problem

However, in the method described in PTL 1, the membrane is controlled only by the tension of the membrane caused by the vacuum drawing. Therefore, the membrane cannot be suitably controlled, and there is a case where the membrane cannot be brought into close contact with the laminate.

In addition, in the method described in PTL 2, it is necessary to provide facilities such as a pump or a pipe for vacuum drawing and to provide a mechanism for lowering the support plate. Therefore, there is a possibility that the structure becomes complicated and the cost increases or the maintainability is deteriorated.

The present disclosure has been made in view of such circumstances, and an object of the present disclosure is to provide a processing device and a processing method capable of suitably bringing a membrane into close contact with an object to be processed.

The object of the present disclosure is to provide a processing device and a processing method capable of simplifying a structure.

### Solution to Problem

In order to solve the problem, the processing device and the processing method of the present disclosure adopt the following means.

A processing device according to an aspect of the present disclosure performs bending processing on a plate-shaped object to be processed, the processing device including: a pair of mandrel blocks each having a first surface and a second surface that extends from an end portion of the first surface in a bent or curved manner, and in which the object to be processed is installed on a connecting portion between the first surface and the second surface, the pair of mandrel blocks being disposed side by side in a predetermined direction; a wedge block that is disposed between the pair of mandrel blocks to protrude from the second surface of the mandrel block in an intersecting direction intersecting the predetermined direction; and a membrane that covers the object to be processed in a state of being installed on the mandrel blocks, the mandrel blocks, and the wedge block, in which one or both of the pair of mandrel blocks are movable in the predetermined direction such that the mandrel blocks are separated from each other in the predetermined direction, the membrane is pulled in the predetermined direction in accordance with the movement of the mandrel blocks in the predetermined direction, and the wedge block moves in the intersecting direction such that a protrusion length from the second surface is shortened in accordance with the movement of the mandrel blocks in the predetermined direction.

A processing method according to another aspect of the present disclosure of performing bending processing on a plate-shaped object to be processed, the processing method including: an object-to-be-processed installation step of installing, with respect to a pair of mandrel blocks each having a first surface and a second surface that extends from an end portion of the first surface in a bent or curved manner and being disposed side by side in a predetermined direction, the object to be processed on a connecting portion between the first surface and the second surface; a wedge block installation step of installing a wedge block between the pair of mandrel blocks to protrude from the second surface of the mandrel block in an intersecting direction intersecting the predetermined direction; a membrane installation step of installing a membrane to cover the object to be processed in a state of being installed on the mandrel blocks, the mandrel blocks, and the wedge block; and a movement step of moving one or both of the pair of mandrel blocks in the predetermined direction such that the mandrel blocks are separated from each other in the predetermined direction, in which in the movement step, the mandrel blocks pull the membrane in the predetermined direction in accordance with the movement of the mandrel blocks in the predetermined direction, and in the movement step, the wedge block is moved in the intersecting direction such that a protrusion length from the second surface is shortened in accordance with the movement of the mandrel blocks in the predetermined direction.

### Advantageous Effects of Invention

According to the present disclosure, the membrane can be suitably brought into close contact with the object to be processed.

In addition, according to the present disclosure, the structure can be simplified.

### Brief Description of Drawings

Fig. 1 is a perspective view showing a composite structure according to a first embodiment of the present disclosure.
Fig. 2 is a perspective view showing a processing device according to the first embodiment of the present disclosure.
Fig. 3 is a perspective view showing a main part of the processing device according to the first embodiment of the present disclosure.
Fig. 4 is a schematic plan view showing the main part of the processing device according to the first embodiment of the present disclosure.
Fig. 5 is a schematic front view showing the processing device according to the first embodiment of the present disclosure.
Fig. 6 is a schematic front view showing the processing device according to the first embodiment of the present disclosure.
Fig. 7 is a schematic front view showing the processing device according to the first embodiment of the present disclosure.
Fig. 8 is a schematic front view showing the processing device according to the first embodiment of the present disclosure.
Fig. 9 is a schematic front view showing a processing device according to a second embodiment of the present disclosure.
Fig. 10 is a schematic front view showing a processing device according to a third embodiment of the present disclosure.

### Description of Embodiments

Hereinafter, embodiments of a processing device and a processing method according to the present disclosure will be described with reference to the drawings.

### [First Embodiment]

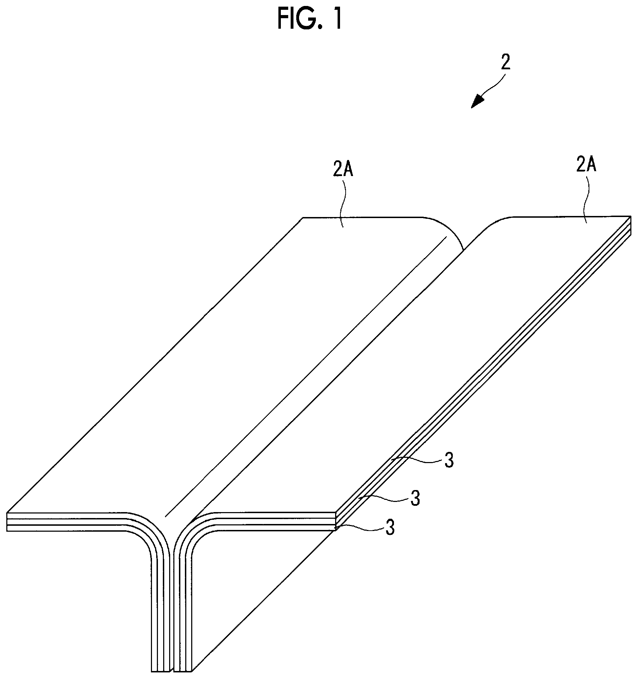

Hereinafter, a first embodiment of the present disclosure will be described with reference to Figs. 1 to 8. In the following description, a direction in which the mandrel block moves is referred to as an X-axis direction. In addition, a direction in which the wedge block moves is referred to as a Z-axis direction. In addition, a direction orthogonal to the X-axis direction and the Z-axis direction is referred to as a Y-axis direction. In addition, in the following description, since the Z-axis direction is an up-down direction, the Z-axis direction may be referred to as the up-down direction.

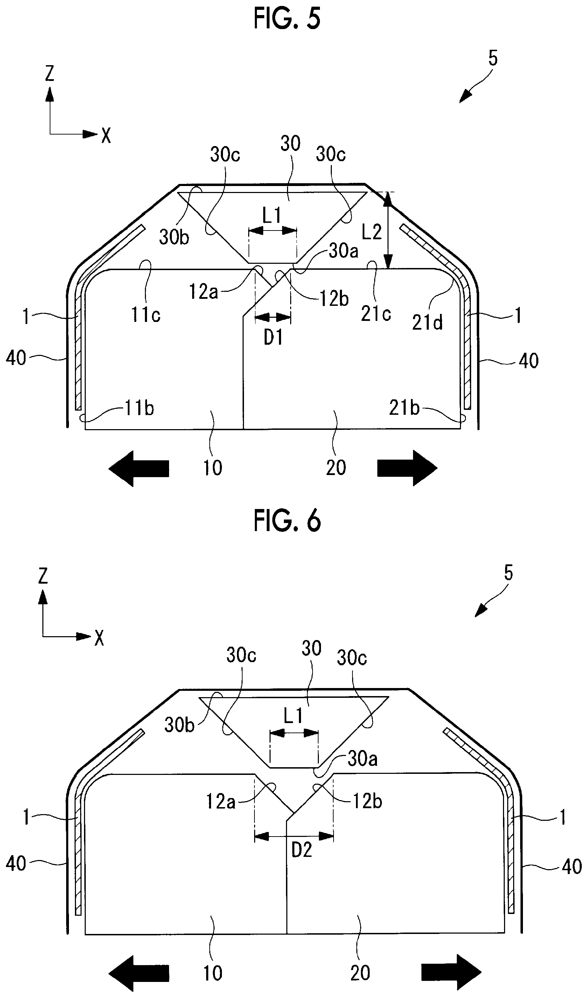

The forming device according to the present embodiment is used, for example, when manufacturing a composite structure 2 (refer to Fig. 1) from a plate-shaped laminate 1 (refer to Fig. 5 and the like) formed by laminating fiber sheets 3 (refer to Fig. 1) impregnated with a resin such as a prepreg. Specifically, the forming device is used when performing bending processing on the laminate 1 to form the laminate 1 into a predetermined shape. Examples of the composite structure 2 include a stringer used for a fuselage, a main wing, or the like of an aircraft. The material for forming the laminate 1 is not limited to the above-described material. For example, a laminate may be formed using a fiber sheet (dry sheet) that includes only a fiber and does not include a resin.

### [Composite Structure]

As shown in Fig. 1, a composite structure 2 according to the present embodiment is an elongated member. The cross section of the composite structure 2 in the longitudinal direction (cross section when cut along a plane orthogonal to the longitudinal direction) has a T shape. The composite structure 2 extends linearly along the longitudinal direction, and has a uniform shape of the cross section in the longitudinal direction.

The composite structure 2 is manufactured by joining two composite structures 2A having an L-shaped cross section in the longitudinal direction. In the present embodiment, a device and a processing method for processing the plate-shaped laminate 1 into the composite structure 2A having an L-shaped cross section in the longitudinal direction will be described.

### [Processing Device]

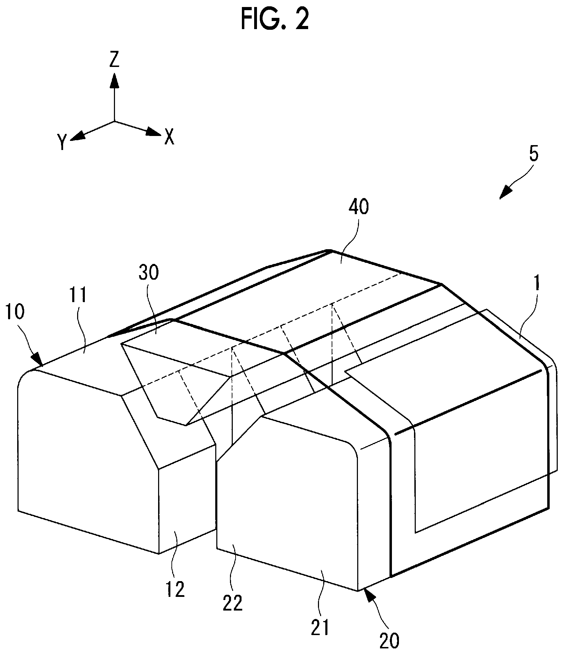

As shown in Fig. 2, the processing device 5 includes a pair of mandrel blocks (a first mandrel block 10 and a second mandrel block 20) on which the laminate 1 is installed, a wedge block 30 disposed between the first mandrel block 10 and the second mandrel block 20, a membrane 40 that covers the first mandrel block 10, the second mandrel block 20, and the wedge block 30, and a drive device (drive unit) that moves the first mandrel block 10 and the second mandrel block 20.

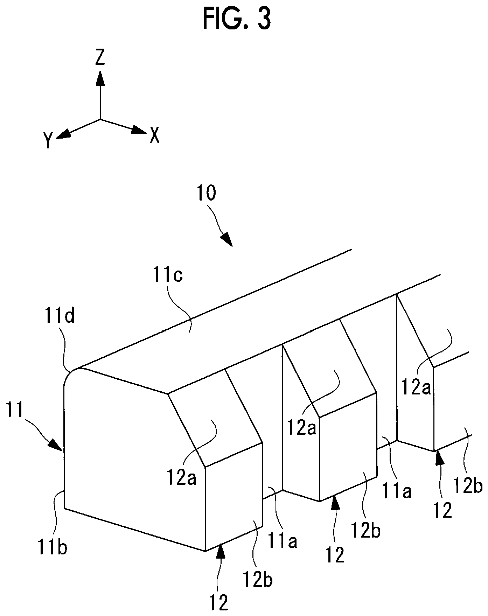

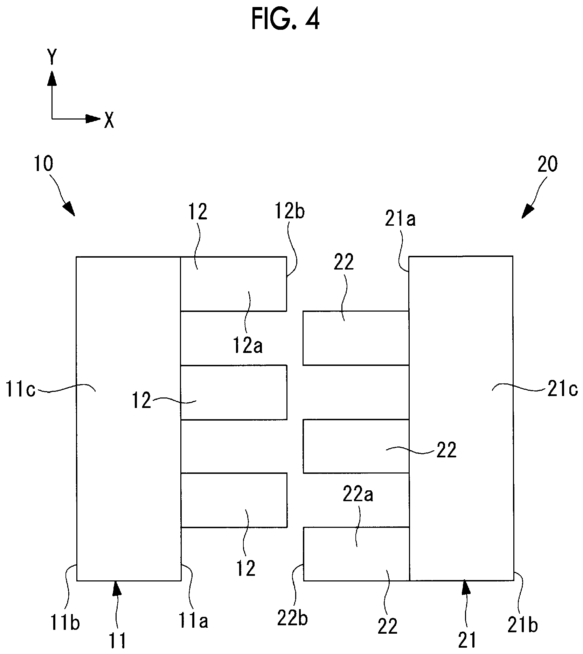

As shown in Fig. 2, the first mandrel block 10 is disposed side by side with the second mandrel block 20 in the X-axis direction (predetermined direction). As shown in Figs. 3 and 4, the first mandrel block 10 integrally has a base portion 11 which is a portion on a side far from the second mandrel block 20, and a plurality of first protrusion portions 12 that protrude from a facing surface 11a which is a surface of the base portion 11 on a second mandrel block 20 side. The facing surface 11a is a flat surface defined by the Y-axis direction and the X-axis direction.

As shown in Fig. 5, the laminate 1 is installed on the base portion 11. As shown in Figs. 3 and 5, the base portion 11 has a side surface (first surface) 11b which is a surface on a side far from the second mandrel block 20 (that is, a surface on a side opposite to the facing surface 11a), and an upper surface (second surface) 11c which extends from an upper end portion of the side surface 11b in a direction toward the second mandrel block 20 in a curved manner. The laminate 1 is installed over the side surface 11b, the upper surface 11c, and a connecting portion 11d between the side surface 11b and the upper surface 11c of the first mandrel block 10. The side surface 11b is a flat surface defined by the Y-axis direction and the X-axis direction. In addition, the upper surface 11c is a flat surface defined by the Y-axis direction and the X-axis direction. In addition, the connecting portion 11d is a curved surface.

As shown in Figs. 3 and 4, the plurality of first protrusion portions 12 are arranged at equal intervals along the Y-axis direction. The first protrusion portion 12 is arranged in a comb tooth shape.

As shown in Figs. 3 and 5, the first protrusion portion 12 includes a mandrel inclined surface (first inclined surface) 12a that is bent and extends obliquely downward from an end portion of the upper surface 11c of the base portion 11 in the X-axis direction, and a vertical surface 12b that is bent and extends downward from a lower end of the mandrel inclined surface 12a. The mandrel inclined surface 12a is inclined to approach the second mandrel block 20 as the mandrel inclined surface 12a goes toward the moving direction (downward) of the wedge block 30. The mandrel inclined surface 12a is a flat surface. The vertical surface 12b is a flat surface defined by the Y-axis direction and the X-axis direction.

The second mandrel block 20 is configured to be point-symmetrical with the first mandrel block 10 around the center point of the processing device 5 in the X-axis direction and the Y-axis direction.

As shown in Fig. 2, the second mandrel block 20 is disposed side by side with the first mandrel block 10 in the X-axis direction (predetermined direction). As shown in Fig. 4, the second mandrel block 20 integrally has a base portion 21 which is a portion on a side far from the first mandrel block 10, and a plurality of second protrusion portions 22 that protrude from a facing surface 21a which is a surface of the base portion 21 on a first mandrel block 10 side. The facing surface 21a is a flat surface defined by the Y-axis direction and the X-axis direction.

As shown in Fig. 5, the laminate 1 is installed on the base portion 21. As shown in Figs. 3 and 5, the base portion 21 has a side surface (first surface) 21b which is a surface on a side far from the first mandrel block 10 (that is, a surface on a side opposite to the facing surface 21a), and an upper surface (second surface) 21c which extends from an upper end portion of the side surface 21b in a direction toward the first mandrel block 10 in a curved manner. The laminate 1 is installed over the side surface 21b, the upper surface 21c, and a connecting portion 21d (refer to Fig. 5) between the side surface 21b and the upper surface 21c of the second mandrel block 20. The side surface 21b is a flat surface defined by the Y-axis direction and the X-axis direction. In addition, the upper surface 21c is a flat surface defined by the Y-axis direction and the X-axis direction. In addition, the connecting portion 21d is a curved surface.

As shown in Figs. 3 and 4, the plurality of second protrusion portions 22 are arranged at equal intervals along the Y-axis direction. The second protrusion portion 22 is arranged in a comb tooth shape.

As shown in Figs. 3 and 5, the second protrusion portion 22 includes a mandrel inclined surface (first inclined surface) 22a that is bent and extends obliquely downward from an end portion of the upper surface 21c of the base portion 21 in the X-axis direction, and a vertical surface 22b that is bent and extends downward from a lower end of the mandrel inclined surface 22a. The mandrel inclined surface 22a is inclined to approach the first mandrel block 10 as the mandrel inclined surface 22a goes toward the moving direction (downward) of the wedge block 30. The mandrel inclined surface 22a is a flat surface. The vertical surface 22b is a flat surface defined by the Y-axis direction and the X-axis direction.

As shown in Fig. 4, the first protrusion portion 12 and the second protrusion portion 22 are disposed not to overlap each other when viewed in the X-axis direction. That is, the first protrusion portion 12 and the second protrusion portion 22 are disposed to be shifted in the Y-axis direction.

In addition, the length of the first protrusion portion 12 in the Y-axis direction is shorter than the separation distance between the second protrusion portions 22 adjacent to each other. Accordingly, the first protrusion portion 12 can be inserted between the second protrusion portions 22 adjacent to each other. In addition, the length of the second protrusion portion 22 in the Y-axis direction is shorter than the separation distance between the first protrusion portions 12 adjacent to each other. Accordingly, the second protrusion portion 22 can be inserted between the first protrusion portions 12 adjacent to each other. In addition, the length of the first protrusion portion 12 in the X-axis direction and the length of the second protrusion portion 22 in the X-axis direction are substantially the same.

In addition, in the first mandrel block 10 and the second mandrel block 20, in a state where the base portion 11 of the first mandrel block 10 and the base portion 21 of the second mandrel block 20 are closest to each other (state shown in Fig. 5), the separation distance D1 between the base portion 11 and the base portion 21 is shorter than the length L1 in the X-axis direction of a lower surface 30a of the wedge block 30 (to be described later).

As shown in Fig. 2, the wedge block 30 is an elongated member extending in the Y-axis direction. The wedge block 30 is a member having a trapezoidal cross section in the Y-axis direction. The wedge block 30 is provided between the first mandrel block 10 and the second mandrel block 20. As shown in Fig. 5, the wedge block 30 is disposed to protrude in the Z-axis direction (intersecting direction) from the upper surface 11c of the base portion 11 of the first mandrel block 10. In addition, the wedge block 30 is disposed to protrude in the Z-axis direction (intersecting direction) from the upper surface 21c of the base portion 21 of the second mandrel block 20.

The wedge block 30 has the lower surface 30a which is a surface on a side of the first mandrel block 10 and the second mandrel block 20, an upper surface 30b which is a surface on a side opposite to the lower surface 30a, and a wedge inclined surface (second inclined surface) 30c which connects the lower surface 30a and the upper surface 30b.

The length of the lower surface 30a in the X-axis direction is shorter than the length of the upper surface 30b in the X-axis direction. The lower surface 30a is a flat surface. The lower surface 30a is a flat surface defined by the Y-axis direction and the X-axis direction.

The upper surface 30b is a flat surface. The upper surface 30b is a flat surface defined by the Y-axis direction and the X-axis direction.

The pair of wedge inclined surfaces 30c are inclined such that the wedge inclined surfaces 30c approach each other from the upper surface 30b toward the lower surface 30a. The wedge inclined surface 30c is a flat surface. The inclination angle of the wedge inclined surface 30c with respect to the horizontal plane is the same as the inclination angle of the mandrel inclined surface 12a with respect to the horizontal plane.

The membrane 40 is formed of a material (for example, silicone rubber or the like) having elasticity in the X-axis direction. The membrane 40 covers the laminate 1, the first mandrel block 10, the second mandrel block 20, and the wedge block 30 from above and from the side. One end portion of the membrane 40 in the X-axis direction is fixed to a lower end portion of the side surface 11b of the first mandrel block 10. In addition, the other end portion of the membrane 40 in the X-axis direction is fixed to a lower end portion of the side surface 21b of the second mandrel block 20.

The drive device moves the first mandrel block 10 and the second mandrel block 20 in the X-axis direction.

### [Processing Method]

Next, a processing method of the laminate 1 using the processing device 5 according to the present embodiment will be described with reference to Figs. 5 to 8.

First, as shown in Fig. 5, the laminate 1 is installed on each of the first mandrel block 10 and the second mandrel block 20. In the laminate 1, a location where the bending processing is to be performed is preliminarily curved at the stage of installing the laminate 1 on the first mandrel block 10 and the second mandrel block 20. The laminate 1 is installed such that a location (hereinafter, referred to as a "curved portion") where bending processing is performed comes into contact with or brought close to the connecting portions 11d and 21d of each of the mandrel blocks. At this time, the laminate 1 is in surface contact with the side surfaces 11b and 21b of each of the mandrel blocks on one side of the curved portion. In addition, the laminate 1 is separated from the upper surfaces 11c and 21c of each of the mandrel blocks on the other side of the curved portion.

At this time, the first mandrel block 10 and the second mandrel block 20 are in a state where the first protrusion portions 12 are inserted between the second protrusion portions 22 and the second protrusion portions 22 are inserted between the first protrusion portions 12, and the base portion 11 of the first mandrel block 10 and the base portion 21 of the second mandrel block 20 are closest to each other. Specifically, the first mandrel block 10 and the second mandrel block 20 are disposed such that the separation distance D1 between the base portion 11 and the base portion 21 is shorter than the length L1 in the X-axis direction of the lower surface 30a of the wedge block 30.

Next, the wedge block 30 is disposed to straddle the upper surface 11c of the first mandrel block 10 and the upper surface 21c of the second mandrel block 20. The lower surface 30a of the wedge block 30 is in contact with the upper surface 11c of the first mandrel block 10 and the upper surface 21c of the second mandrel block 20. At this time, the wedge block 30 protrudes from the upper surface 11c of the first mandrel block 10 and the upper surface 21c of the second mandrel block 20 by a predetermined protrusion length L2.

Next, the laminate 1, the first mandrel block 10, the second mandrel block 20, and the wedge block 30 are covered with the membrane 40 from above and from the side. In addition, one end portion in the X-axis direction is fixed to a lower end portion of the side surface 11b of the first mandrel block 10, and the other end portion in the X-axis direction is fixed to a lower end portion of the side surface 21b of the second mandrel block 20. In this state, the membrane 40 is slightly slack or is in a natural length. That is, the tension in the plane is 0.

At this time, a space is formed between the upper surface 11c of the first mandrel block 10 and the upper surface 21c of the second mandrel block 20 and the membrane 40. In this state, a part of the laminate 1 is disposed in the space. The part of the laminate 1 is a portion that moves to be pressed against each mandrel block when bending processing is performed.

Next, as indicated by arrows in Fig. 5, the drive device moves the first mandrel block 10 and the second mandrel block 20 to be separated from each other in the X-axis direction. As a result, the membrane 40 is pulled in the X-axis direction, and the tension increases.

For a while after the start of movement, the wedge block 30 maintains a state of being placed on the upper surface 11c of the first mandrel block 10 and the upper surface 21c of the second mandrel block 20. Since the membrane 40 is pulled in the X-axis direction, the tension continues to increase. The wedge block 30 is pressed downward by the tension of the membrane 40.

When the first mandrel block 10 and the second mandrel block 20 continue to move in the X-axis direction, as shown in Fig. 6, the separation distance D2 between the base portion 11 and the base portion 21 becomes longer than the length L1 of the lower surface 30a of the wedge block 30 in the X-axis direction.

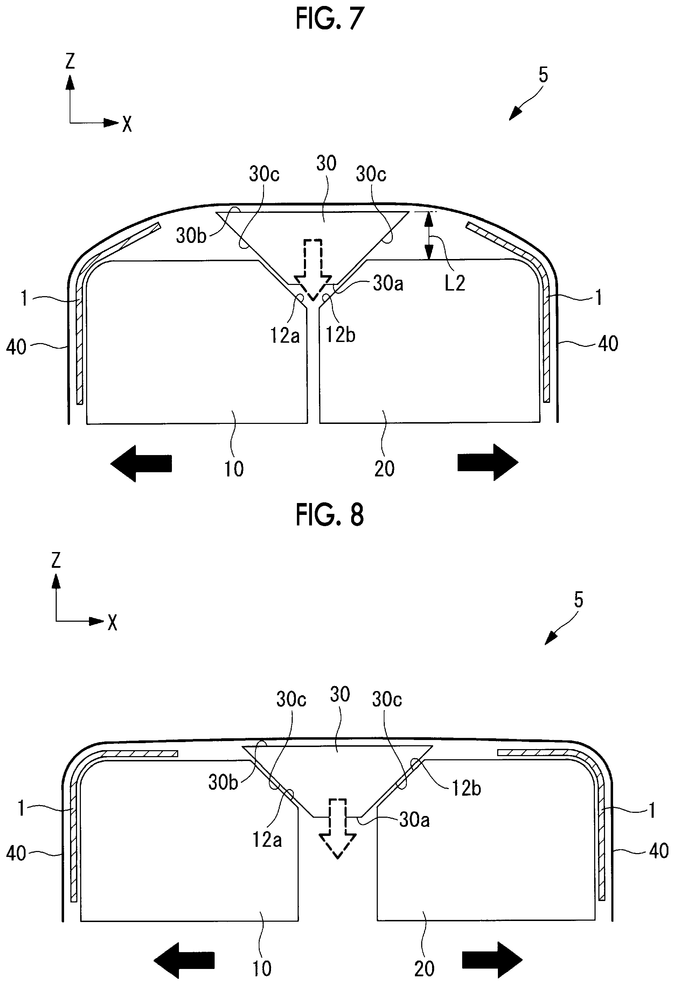

When the separation distance D2 between the base portion 11 and the base portion 21 is longer than the length L1 of the lower surface 30a of the wedge block 30 in the X-axis direction, as shown in Fig. 7, the wedge block 30 enters a gap between the mandrel inclined surface 12a of the first mandrel block 10 and the mandrel inclined surface 22a of the second mandrel block 20. When the wedge block 30 enters the gap, the mandrel inclined surface 12a of the first mandrel block 10, the mandrel inclined surface 22a of the second mandrel block 20, and the wedge inclined surface 30c of the wedge block 30 come into contact with each other.

In this state, when the first mandrel block 10 and the second mandrel block 20 continue to move in the X-axis direction, the wedge block 30 moves downward due to the weight of the wedge block 30 and the pressing force of the membrane 40 (refer to the broken line arrow in Fig. 7). At this time, the wedge block 30 moves such that the wedge inclined surface 30c slides on the mandrel inclined surfaces 12a and 22a. In addition, as the wedge block 30 moves downward, the protrusion length L2 of the wedge block 30 also gradually decreases. In this way, the wedge block 30 moves in the Z-axis direction such that the protrusion length L2 is shortened, in accordance with the movement of the first mandrel block 10 and the second mandrel block 20 in the X-axis direction.

When the first mandrel block 10 and the second mandrel block 20 move by a predetermined distance, the drive device stops the movement of the first mandrel block 10 and the second mandrel block 20. At this time, the laminate 1 is in close contact with the membrane 40 and comes into contact with the upper surface 11c of the first mandrel block 10 and the upper surface 21c of the second mandrel block 20.

In this way, the two composite structures 2A having the L-shaped cross-sectional shape in the longitudinal direction are manufactured at the same time by performing the bending processing on the two plate-shaped laminates 1. In a case of manufacturing the composite structure 2 having the T-shaped cross-sectional shape in the longitudinal direction, two composite structures 2A having the L-shaped cross-sectional shape are joined (refer to Fig. 1).

According to the present embodiment, the following actions and effects are exhibited.

In the present embodiment, the wedge block 30 is disposed to protrude from the upper surfaces 11c and 21c of the first mandrel block 10 and the second mandrel block 20 in the Z-axis direction intersecting the X-axis direction. Accordingly, the membrane 40 that covers the first mandrel block 10, the second mandrel block 20, and the wedge block 30 is lifted by the wedge block 30, and is separated from the upper surfaces 11c and 21c of the first mandrel block 10 and the second mandrel block 20 in a part of the region. In addition, in the present embodiment, the wedge block 30 is provided such that the protrusion length L2 is shortened in accordance with the movement of the first mandrel block 10 and the second mandrel block 20 in the X-axis direction. Accordingly, when the pair of first mandrel block 10 and the second mandrel block 20 are moved to be separated from each other by the drive device, the protrusion length L2 of the wedge block 30 is shortened. When the protrusion length L2 of the wedge block 30 is shortened, the membrane 40 lifted by the wedge block 30 moves to approach the upper surfaces 11c and 21c of the first mandrel block 10 and the second mandrel block 20. In addition, since the pair of first mandrel block 10 and the second mandrel block 20 are moved to be separated from each other, the membrane 40 is pulled in the X-axis direction, and the tension is increased in accordance with the movement of the first mandrel blocks 10 and the second mandrel blocks 20. In this manner, the membrane 40 comes into close contact with the laminate 1 installed on the first mandrel block 10 and the second mandrel block 20 and presses the laminate 1 against the connecting portions 11d and 21d of the first mandrel block 10 and the second mandrel block 20. The laminate 1 pressed against the connecting portions 11d and 21d of the first mandrel block 10 and the second mandrel block 20 is formed into a shape corresponding to the shapes of the connecting portions 11d and 21d. In this way, bending processing can be performed on the laminate 1.

In addition, in the present embodiment, the first mandrel block 10, the second mandrel block 20, and the wedge block 30 are moved so that the membrane 40 is brought into close contact with the laminate 1, the first mandrel block 10, and the second mandrel block 20. In other words, the movement (movement or deformation mode) of the membrane 40 is controlled by the first mandrel block 10, the second mandrel block 20, and the wedge block 30. That is, the movement of the membrane 40 is controlled by another member. Accordingly, the membrane 40 can be more reliably brought into close contact with the laminate 1, compared to a case where the movement of the membrane 40 is not controlled by another member (for example, a case where the membrane 40 is controlled only by a force generated by the vacuum drawing). Therefore, the bending processing can be suitably performed on the laminate 1.

In addition, in the present embodiment, the laminate 1 is pressed against the first mandrel block 10 and the second mandrel block 20 by the membrane 40 and bending processing is performed on the laminate 1 only by the movement of the first mandrel block 10 and the second mandrel block 20 in the X-axis direction and the movement of the wedge block 30 in the Z-axis direction (that is, the linear movement of the blocks). Accordingly, for example, compared to a case where a suction device or the like is provided to draw a vacuum of a space between the membrane 40 and the block, a structure can be simplified. Therefore, the cost can be reduced. In addition, maintainability can be improved.

In addition, in a case of vacuum drawing, there is also an increased risk of quality defects caused by defects in the seal structure provided on the outer periphery. On the other hand, in the present embodiment, since it is not necessary to provide the seal structure, it is possible to prevent quality defects caused by defects in the seal structure.

In the present embodiment, the wedge block 30 has the wedge inclined surface 30c that is in surface contact with the mandrel inclined surfaces 12a and 22a. Accordingly, when the first mandrel block 10 and the second mandrel block 20 move in the X-axis direction and the wedge block 30 is pressed by the membrane 40, the wedge inclined surface 30c of the wedge block 30 slides on the mandrel inclined surfaces 12a and 22a. In this way, the wedge block 30 can be moved in the Z-axis direction in accordance with the movement of the first mandrel block 10 and the second mandrel block 20 in the X-axis direction.

In addition, in the present embodiment, the wedge block 30 moves in the Z-axis direction in accordance with the movement of the first mandrel block 10 and the second mandrel block 20. In this way, the wedge block 30 can be moved in the Z-axis direction without providing a drive mechanism for moving the wedge block 30. Therefore, compared to a case where a drive mechanism for moving the wedge block 30 is provided, the number of components can be reduced and the structure can be simplified.

In the present embodiment, the first protrusion portion 12 and the second protrusion portion 22 are disposed not to overlap each other when viewed in the X-axis direction. In this manner, the first mandrel block 10 and the second mandrel block 20 can be brought closer to each other. Therefore, the processing device 5 can be reduced in size.

### [Second Embodiment]

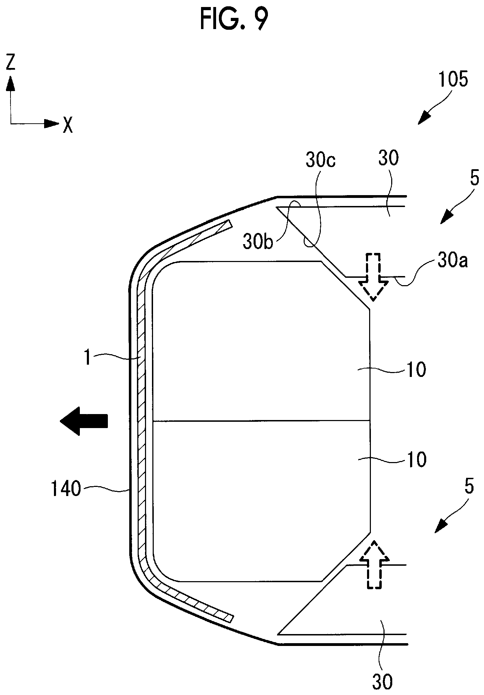

Next, a second embodiment of the present disclosure will be described with reference to Fig. 9.

In the present embodiment, the processing device 105 of the present embodiment is different from the first embodiment in that two processing devices 5 according to the first embodiment are combined to be symmetrical in the Z-axis direction with respect to a surface defined by the X-axis direction and the Y-axis direction. Therefore, the same structure is denoted by the same reference sign, and the description thereof will be omitted.

A membrane 140 according to the present embodiment is not fixed to the first mandrel block 10 and the second mandrel block 20. The membrane 140 is formed in an endless shape.

With such a configuration, the composite structure having a C-shaped cross-sectional shape can be manufactured by performing bending processing on the laminate 1.

### [Third Embodiment]

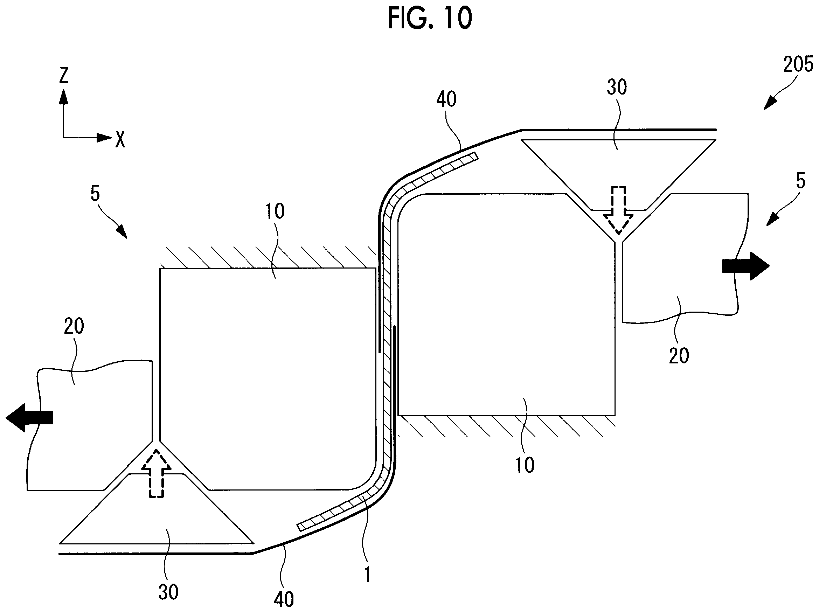

Next, a third embodiment of the present disclosure will be described with reference to Fig. 10.

In the present embodiment, the processing device 205 of the present embodiment is different from the first embodiment in that two processing devices 5 according to the first embodiment are combined to be point-symmetrical. Therefore, the same structure is denoted by the same reference sign, and the description thereof will be omitted.

In the present embodiment, two processing devices 5 are arranged in the X-axis direction, and the upper and lower sides of one processing device 5 are inverted. In addition, the first mandrel block 10 of both the processing devices 5 is fixed, and only the second mandrel block 20 moves in the X-axis direction.

In addition, the laminate 1 is disposed between the two processing devices 5.

With such a configuration, the composite structure having an S-shaped cross-sectional shape can be manufactured by performing bending processing on the laminate 1.

The present disclosure is not limited to each of the above-described embodiments, and can be appropriately modified within a scope that does not depart from the gist of the present disclosure.

For example, in the above-described embodiment, an example in which the mandrel inclined surfaces 12a and 22a are flat surfaces has been described. However, the present disclosure is not limited thereto. The mandrel inclined surfaces 12a and 22a may be curved surfaces.

In addition, in the above-described embodiment, an example has been described in which both the first mandrel block 10 and the second mandrel block 20 move in the X-axis direction. However, the present disclosure is not limited thereto. For example, one of the first mandrel block 10 and the second mandrel block 20 may move in the X-axis direction, and the other may be fixed.

In addition, in the first embodiment, an example in which the laminate 1 is installed on both the first mandrel block 10 and the second mandrel block 20 has been described. However, the present disclosure is not limited thereto. The laminate 1 may be installed only on one of the first mandrel block 10 and the second mandrel block 20. In this case, a dummy member having the same shape as the shape of the laminate after the bending processing may be disposed at a place where the laminate 1 is originally installed on the mandrel block on which the laminate 1 is not installed.

In addition, in the above-described embodiment, an example has been described in which the drive device moves the first mandrel block 10 and/or the second mandrel block 20 in the X-axis direction. However, the present disclosure is not limited thereto. For example, the drive device may move the wedge block 30 downward. In this case, the first mandrel block 10 and/or the second mandrel block 20 is movable in the X-axis direction. That is, the first mandrel block 10 and/or the second mandrel block 20 is allowed to move in the X-axis direction. In this configuration, when the wedge block 30 moves downward, the first mandrel block 10 and/or the second mandrel block 20 is pressed by the wedge block 30. The wedge block 30 and the first mandrel block 10 and/or the second mandrel block 20 are in contact with each other at the inclined surfaces (mandrel inclined surfaces 12a and the like). For this reason, when the pressing force from the wedge block 30 is transmitted to the first mandrel block 10 and the second mandrel block 20, the pressing force is converted into a pressing force in the X-axis direction. In this manner, when the wedge block 30 moves downward, the first mandrel block 10 and/or the second mandrel block 20 moves in the X-axis direction, and the first mandrel block 10 and the second mandrel block 20 are separated from each other.

The processing device and the processing method described in the above-described embodiment are understood as follows, for example.

A processing device (5) according to a first aspect of the present disclosure performs bending processing on a plate-shaped object to be processed (1), the processing device including: a pair of mandrel blocks (10, 20) each having a first surface (11b) and a second surface (11c) that extends from an end portion of the first surface in a bent or curved manner, and in which the object to be processed is installed on a connecting portion (11d) between the first surface and the second surface, the pair of mandrel blocks being disposed side by side in a predetermined direction (X-axis direction); a wedge block (30) that is disposed between the pair of mandrel blocks to protrude from the second surface of the mandrel block in an intersecting direction (Z-axis direction) intersecting the predetermined direction; and a membrane (40) that covers the object to be processed in a state of being installed on the mandrel blocks, the mandrel blocks, and the wedge block, in which one or both of the pair of mandrel blocks are movable in the predetermined direction such that the mandrel blocks are separated from each other in the predetermined direction, the membrane is pulled in the predetermined direction in accordance with the movement of the mandrel blocks in the predetermined direction, and the wedge block moves in the intersecting direction such that a protrusion length from the second surface is shortened in accordance with the movement of the mandrel blocks in the predetermined direction.

In the above-described configuration, the wedge block is disposed to protrude from the second surface of the mandrel block in the intersecting direction intersecting the predetermined direction. Accordingly, the membrane that covers the mandrel block and the wedge block is lifted by the wedge block, and is separated from the second surface of the mandrel block in a part of the region. In addition, in the above-described configuration, the wedge block is provided such that the protrusion length is shortened in accordance with the movement of the mandrel block in the predetermined direction. Accordingly, when the pair of mandrel blocks are moved to be separated from each other, the protrusion length of the wedge block is shortened. When the protrusion length of the wedge block is shortened, the membrane lifted by the wedge block moves to approach the second surface of the mandrel block. In addition, since the pair of mandrel blocks are moved to be separated from each other, the membrane is pulled in the predetermined direction, and the tension is increased in accordance with the movement of the mandrel blocks. In this manner, the membrane comes into close contact with the object to be processed installed on the mandrel block and presses the object to be processed against the connecting portion of the mandrel block. The object to be processed pressed against the connecting portion of the mandrel block is formed into a shape corresponding to the shape of the connecting portion. In this way, bending processing can be performed on the object to be processed.

In addition, in the above-described configuration, the mandrel block and the wedge block are moved so that the membrane is brought into close contact with the object to be processed and the mandrel block. In other words, the movement (movement or deformation mode) of the membrane is controlled by the mandrel block and the wedge block. That is, the movement of the membrane is controlled by another member. Accordingly, the membrane can be more reliably brought into close contact with the object to be processed, compared to a case where the movement of the membrane is not controlled by another member (for example, a case where the membrane is controlled only by a force generated by the vacuum drawing). Therefore, the bending processing can be suitably performed on the object to be processed.

In addition, in the above-described configuration, the object to be processed is pressed against the mandrel block by the membrane and bending processing is performed on the object to be processed only by the movement of the mandrel block in the predetermined direction and the movement of the wedge block in the intersecting direction (that is, the linear movement of the blocks). Accordingly, for example, compared to a case where a suction device or the like is provided to draw a vacuum of a space between the membrane and the block, a structure can be simplified. Therefore, the cost can be reduced. In addition, maintainability can be improved.

In addition, in the processing device according to a second aspect of the present disclosure, in the first aspect, the pair of mandrel blocks has a first inclined surface (12a) that is bent from the second surface and extends in a moving direction of the wedge block, the wedge block has a second inclined surface (30c) that is in surface contact with the first inclined surface, and the first inclined surface is inclined to approach the other mandrel block as the first inclined surface goes toward the moving direction of the wedge block.

In the above-described configuration, the wedge block has the second inclined surface that is in surface contact with the first inclined surface. Accordingly, when the mandrel block moves in the predetermined direction and the wedge block is pressed by the membrane, the second inclined surface of the wedge block slides on the first inclined surface. In this way, the wedge block can be moved in the intersecting direction in accordance with the movement of the mandrel block in the predetermined direction.

In addition, in the above configuration, the wedge block moves in the intersecting direction in accordance with the movement of the mandrel block. In this way, the wedge block can be moved in the intersecting direction without providing a drive mechanism for moving the wedge block. Therefore, compared to a case where a drive mechanism for moving the wedge block is provided, the number of components can be reduced and the structure can be simplified.

In addition, in the processing device according to a third aspect of the present disclosure, in the first aspect or the second aspect, the pair of mandrel blocks includes a first mandrel block (10) and a second mandrel block (20) disposed side by side with the first mandrel block in the predetermined direction, the first mandrel block has a first protrusion portion (12) protruding in the predetermined direction on a surface on a second mandrel block side, the second mandrel block has a second protrusion portion (22) protruding in the predetermined direction on a surface on a first mandrel block side, and the first protrusion portion and the second protrusion portion are disposed not to overlap each other when viewed in the predetermined direction.

In the above-described configuration, the first protrusion portion and the second protrusion portion are disposed not to overlap each other when viewed in the predetermined direction. In this manner, the first mandrel block and the second mandrel block can be brought closer to each other. Therefore, the processing device can be reduced in size.

A processing method according to the first aspect of the present disclosure of performing bending processing on a plate-shaped object to be processed (1), the processing method including: an object-to-be-processed installation step of installing, with respect to a pair of mandrel blocks (10, 20) each having a first surface (11b) and a second surface (11c) that extends from an end portion of the first surface in a bent or curved manner and being disposed side by side in a predetermined direction (X-axis direction), the object to be processed on a connecting portion (11d) between the first surface and the second surface; a wedge block installation step of installing a wedge block (30) between the pair of mandrel blocks to protrude from the second surface of the mandrel block in an intersecting direction (Z-axis direction) intersecting the predetermined direction; a membrane installation step of installing a membrane (40) to cover the object to be processed in a state of being installed on the mandrel blocks, the mandrel blocks, and the wedge block; and a movement step of moving one or both of the pair of mandrel blocks in the predetermined direction such that the mandrel blocks are separated from each other in the predetermined direction, in which in the movement step, the mandrel blocks pull the membrane in the predetermined direction in accordance with the movement of the mandrel blocks in the predetermined direction, and in the movement step, the wedge block is moved in the intersecting direction such that a protrusion length from the second surface is shortened in accordance with the movement of the mandrel blocks in the predetermined direction.

### Reference Signs List

1: laminate
2: composite structure
2A: composite structure
3: fiber sheet
5: processing device
10: first mandrel block
11: base portion
11a: facing surface
11b: side surface
11c: upper surface
11d: connecting portion
12: first protrusion portion
12a: mandrel inclined surface
12b: vertical surface
20: second mandrel block
21: base portion
21a: facing surface
21b: side surface
21c: upper surface
21d: connecting portion
22: second protrusion portion
22a: mandrel inclined surface
22b: vertical surface
30: wedge block
30a: lower surface
30b: upper surface
30c: wedge inclined surface
40: membrane
105: processing device
140: membrane
205: processing device

## Claims

1. A processing device that performs bending processing on a plate-shaped object to be processed, the processing device comprising:
a pair of mandrel blocks each having a first surface and a second surface that extends from an end portion of the first surface in a bent or curved manner, and in which the object to be processed is installed on a connecting portion between the first surface and the second surface, the pair of mandrel blocks being disposed side by side in a predetermined direction;
a wedge block that is disposed between the pair of mandrel blocks to protrude from the second surface of the mandrel block in an intersecting direction intersecting the predetermined direction; and
a membrane that covers the object to be processed in a state of being installed on the mandrel blocks, the mandrel blocks, and the wedge block, wherein
one or both of the pair of mandrel blocks are movable in the predetermined direction such that the mandrel blocks are separated from each other in the predetermined direction,
the membrane is pulled in the predetermined direction in accordance with the movement of the mandrel blocks in the predetermined direction, and
the wedge block moves in the intersecting direction such that a protrusion length from the second surface is shortened in accordance with the movement of the mandrel blocks in the predetermined direction.

2. The processing device according to Claim 1, wherein
the pair of mandrel blocks has a first inclined surface that is bent from the second surface and extends in a moving direction of the wedge block,
the wedge block has a second inclined surface that is in surface contact with the first inclined surface, and
the first inclined surface is inclined to approach the other mandrel block as the first inclined surface goes toward the moving direction of the wedge block.

3. The processing device according to Claim 1 or 2, wherein
the pair of mandrel blocks includes a first mandrel block and a second mandrel block disposed side by side with the first mandrel block in the predetermined direction,
the first mandrel block has a first protrusion portion protruding in the predetermined direction on a surface on a second mandrel block side,
the second mandrel block has a second protrusion portion protruding in the predetermined direction on a surface on a first mandrel block side, and
the first protrusion portion and the second protrusion portion are disposed not to overlap each other when viewed in the predetermined direction.

4. A processing method of performing bending processing on a plate-shaped object to be processed, the processing method comprising:
an object-to-be-processed installation step of installing, with respect to a pair of mandrel blocks each having a first surface and a second surface that extends from an end portion of the first surface in a bent or curved manner and being disposed side by side in a predetermined direction, the object to be processed on a connecting portion between the first surface and the second surface;
a wedge block installation step of installing a wedge block between the pair of mandrel blocks to protrude from the second surface of the mandrel block in an intersecting direction intersecting the predetermined direction;
a membrane installation step of installing a membrane to cover the object to be processed in a state of being installed on the mandrel blocks, the mandrel blocks, and the wedge block; and
a movement step of moving one or both of the pair of mandrel blocks in the predetermined direction such that the mandrel blocks are separated from each other in the predetermined direction, wherein
in the movement step, the mandrel blocks pull the membrane in the predetermined direction in accordance with the movement of the mandrel blocks in the predetermined direction, and
in the movement step, the wedge block is moved in the intersecting direction such that a protrusion length from the second surface is shortened in accordance with the movement of the mandrel blocks in the predetermined direction.
